# EUROPEAN PATENT APPLICATION

(11) **EP 4 632 461 A2**
(43) Date of publication of application: **15.10.2025**
(21) Application number: 25167004.8
(22) Date of filing: 28.03.2025
(51) Int. Cl.: G02B 26/00

(54) **OPTICAL ENHANCEMENT CAVITY WITH A CAVITY DUMPER DEVICE USING AN ACOUSTIC WAVE**

(30) Priority: 12.04.2024 US 202418634400
(71) Applicant: Blue Laser Fusion, Inc., Palo Alto, CA 94301 (US)
(72) Inventor: NAKAMURA, Shuji, Palo Alto, CA, 94301 (US); COHEN, Trevor, Palo Alto, CA, 94301 (US)
(74) Representative: Herrero & Asociados, S.L.

(57) **Abstract**

In an example, the present invention provides a system including a light source configured to generate a laser. The system has an optical enhancement cavity coupled to the light source and configured to increase an intensity of the laser and a cavity dumper coupled to the optical enhancement cavity. The system has an acoustic wave coupled to the cavity dumper to diffract the laser.

## Description

### BACKGROUND OF INVENTION

The present invention relates generally to fusion energy generation techniques. In particular, the present invention provides a laser system and method for fusion energy, related methods, and more particularly techniques for dumping the laser from a cavity region. Merely by way of example, the invention can be applied to a variety of applications, including energy generation for power, spaceships, travel, other vehicles for air, land, and water, defense applications (e.g., satellite, aerospace, land and missile defense, submarines, boats), biotechnology, chemical, mechanical, electrical, and communication and/or data applications.

From the beginning of time, human beings have developed energy sources from natural materials such as wood, coal, oil, and gas products. Unfortunately, burning wood and coal leads to major pollution issues, including adding undesirable carbon particles into the atmosphere. Oil and gas products also have similar limitations and have been a leading cause of "global warming." Renewable energy sources including nuclear, wind, hydroelectric, and solar are promising. However, such renewable energy sources have other shortcomings. Wind only works if the wind is blowing. Solar cannot be used when the sun goes down. Hydroelectric is limited to areas with water, and nuclear, although promising, has had major problems in generating waste and unreliable and dangerous reactors. One other promising energy source has been fusion energy.

Fusion energy is a type of energy production that occurs when two atomic nuclei fuse together, releasing a large amount of energy in the process. It is considered a potential source of clean and abundant energy, as the fuel for fusion reactions (mainly hydrogen) is abundant on Earth and the reactions produce no greenhouse gases or other harmful pollutants.

There are two main approaches to achieving fusion reactions: inertial confinement fusion (ICF) and magnetic confinement fusion (MCF).

Inertial confinement fusion (ICF) involves using high-energy lasers or particle beams to compress and heat a small pellet of fuel, causing it to fuse. The main advantage of ICF is that it can potentially produce fusion reactions with a relatively small amount of fuel and at a relatively low cost. However, the process is still in the experimental stage and there are significant technical challenges to before it can be considered a practical source of energy.

Magnetic confinement fusion (MCF) involves using strong magnetic fields to contain and heat a plasma (a hot, ionized gas) of hydrogen fuel, causing it to fuse. The most common type of MCF is called tokamak fusion, which uses a toroidal (doughnut-shaped) chamber to contain the plasma. The plasma is held in the center of the chamber by strong magnetic fields, which are created by running current through a set of coil windings around the chamber. The plasma is heated by injecting energy into it, either through particle beams or through electromagnetic waves.

The main advantage of MCF is that it has the potential to produce fusion reactions on a larger scale, making it more suitable for generating electricity. However, it is a more complex and costly process than ICF and there are still significant technical challenges to overcome before it can be considered a practical source of energy.

Both ICF and MCF have made significant progress in recent years and there are several experimental facilities around the world working on these technologies. However, achieving sustained fusion reactions with net energy production (meaning the energy produced by the fusion reactions is greater than the energy required to initiate and sustain the reactions) remains a major technical challenge.

There are also other approaches to fusion energy being explored, such as magnetized target fusion and muon-catalyzed fusion. However, these approaches are still in the early stages of development. It is not yet clear if fusion energy will be viable as a source of energy.

From the above, fusion energy has the potential to be a clean and abundant source of energy, but significant technical challenges must be overcome before it can be considered a practical source of energy.

### SUMMARY OF INVENTION

According to the present invention, techniques related generally to fusion energy generation techniques are provided. In particular, the present invention provides a laser system and method for fusion energy, related methods, and more particularly techniques for dumping the laser beam (e.g., continuous mode or multi-mode) from a cavity region. Merely by way of example, the invention can be applied to a variety of applications, including energy generation for power, spaceships, travel, other vehicles for air, land, and water, defense applications (e.g., satellite, aerospace, land and missile defense, submarines, boats), biotechnology, chemical, mechanical, electrical, and communication and/or data applications.

In an example, the present invention provides a system including a light source configured to generate a laser. The system has an optical enhancement cavity coupled to the light source and configured to increase an intensity of the laser and a cavity dumper coupled to the optical enhancement cavity. The system has an acoustic wave coupled to the cavity dumper to diffract (or interact, reflect, or traverse through the DBR mirror) the laser.

Of course, one of ordinary skill in the art would recognize other variations, modifications, and alternatives.

Depending upon the example, the present invention can achieve one or more of these benefits and/or advantages. In an example, the present invention provides a fusion energy system including a high intensity pulse or CW laser system configured with a reactor in a compact and spatially efficient system and related methods. In an example, the high intensity pulse or CW laser system provides enough energy to ignite and sustain fusion energy within the reactor. In an example, the present invention offers advantages of generating fusion power through an efficient size, weight, and cost using the present high intensity lasers. These and other benefits and/or advantages are achievable with the present device and related methods. Further details of these benefits and/or advantages can be found throughout the present specification and more particularly below.

A further understanding of the nature and advantages of the invention may be realized by reference to the latter portions of the specification and attached drawings.

### BRIEF DESCRIPTION FO THE DRAWINGS

In order to more fully understand the present invention, reference is made to the accompanying drawings. Understanding that these drawings are not to be considered limitations in the scope of the invention, the presently described embodiments and the presently understood best mode of the invention are described with additional detail through use of the accompanying drawings in which:
Figure 1 is a simplified diagram of a mirror housing device configured with many piezo actuator devices coupled to a mirror device to adjust the position of a mirror to move into resonance or anti-resonance with a laser cavity according to an example of the present invention.
Figure 2 is a simplified diagram of a three-mirror cavity in which the primary cavity is configured with two mirror devices fixed at a length to amplify and resonate a laser pulse according to an example of the present invention.
Figure 3 is a simplified diagram of a three-mirror cavity in which the primary cavity is configured with two mirror devices fixed at a length to amplify and resonate a laser pulse in an example of the present invention.
Figure 4 is a simplified diagram illustrating a timeline of the operations undergone by the three-mirror cavity and the relative time each operation takes according to an example of the present invention.
Figure 5 is a simplified diagram of a three-mirror cavity wherein each cavity mirror device is suspended in a mirror housing device forming a three-mirror suspended mirror cavity system in an example of the present invention.
Figure 6 is a simplified diagram of a three-mirror cavity wherein each cavity mirror device is coupled to a mirror housing forming a three-mirror rigid mirror cavity system in an example of the present invention.
Figure 7 is a simplified diagram of another example of a high reflection dielectric of Ta₂O₅/SiO₂ and GaAs/Al_{0.9}Ga_{0.}As distributed brag reflectors (DBRs) in an example of the present invention.
Figure 8 is a simplified diagram of another example of a high reflection dielectric of Ta₂O₅/SiO₂ and GaAs/Al_{0.9}Ga_{0.}As distributed brag reflectors (DBRs) in an example of the present invention.
Figure 9 is a simplifies diagram of a cavity dumper wherein AOM is placed in vacuum of the OEC in an example of the present invention.
Figure 10 is a simplifies diagram of a cavity dumper wherein AOM is placed in vacuum of the OEC in an example of the present invention.
Figure 11 is a simplified diagram showing a method to transfer an amplified laser pulse from a primary cavity to a secondary cavity and then dumped from a second cavity or dumped two mirror cavities mentioned in Figures 9 through12 to free space which can then be redirected into a fusion reactor to ignite a fusion fuel according to an example of the present invention.
Figure 12 is a simplified diagram showing a plurality of three-mirror cavities or two mirror cavities mentioned in Figures 9 through 12 that ejects a plurality of laser pulses wherein each laser pulse is redirected into a fusion reactor device and evenly irradiates a fusion fuel according to an example of the present invention.

### DETAILED DESCRIPTION OF THE EXAMPLES

According to the present invention, techniques related generally to fusion energy generation techniques are provided. In particular, the present invention provides a laser system and method for fusion energy, related methods, and more particularly techniques for dumping the laser beam from a cavity region to the outside of the cavity. Merely by way of example, the invention can be applied to a variety of applications, including energy generation for power, spaceships, travel, other vehicles for air, land, and water, defense applications (e.g., satellite, aerospace, land and missile defense, submarines, boats), biotechnology, chemical, mechanical, electrical, and communication and/or data applications.

The following description describes a three-mirror cavity setup to enhance a series of laser pulses into one high power, high energy, laser pulse, and subsequently remove (or "dump") the laser pulse out of the cavity to be directed in free space in order to start (e.g., ignite), maintain, or otherwise influence a nuclear fusion reaction or other application.

In an example, the three-mirror cavity creates a series of coupled Fabry-Perot cavities including a primary cavity defined by a first mirror and a second mirror and a secondary cavity defined by the second and third mirrors. In an example, an effective reflectivity can be changed by modifying a resonance condition of the cavity formed by a second and third mirrors. This configuration allows one to treat the first and second mirrors (the enhancement cavity) as one optical component or "compound mirror" and allows one effectively changes the reflectivity of the second mirror via small motions of the third mirror to bring the coupled cavity into resonance. When the secondary cavity (formed by mirrors 2 and 3) is brought into resonance, the effective transmittance of the compound mirror become high, and laser energy is ejected from the enhancement cavity (formed by mirrors 1 and 2) is removed from the cavity system to be directed outside of the cavity and to influence an application such as a fusion reaction.

In an example, a principle is associated with resonance conditions of each cavity. The enhancement cavity is held in resonance in order to build up or "stack" a sufficient number of pulses into one high energy pulse. The secondary cavity (mirrors 2 and 3) is held in an anti-resonant condition, which prevents photons from being held in the secondary cavity due to destructive interference in the anti-resonant condition. When the secondary cavity is brought into resonance by moving mirror 3 using a piezo actuator which has a fast response time, e.g., of 50 microseconds, photons can be stored within the cavity, which increases the effective transmittance of mirror 2, causing the energy stored in the enhancement cavity to be removed from the cavity. By selecting the reflectivity of the mirror coatings an optimal transmittance or desirable value can be achieved when both cavities are in the resonance condition to effectively "dump" as much laser energy as desirable or available in one high energy pulse.

When a cavity is in its resonance condition, an exact integer number of wavelengths of light fits within the cavity, resulting in constructive laser light being stored within the cavity. When the cavity is in an anti-resonant condition, an exact half-integer number of wavelengths fits within the cavity resulting in destructive interference of the contained laser light, preventing laser energy from being stored within said cavity in an example.

In order to shift from the anti-resonant to resonant condition, the final mirror should be moved by a quarter wavelength, or λ/4, in order to go from the anti-resonant condition to the resonant condition. Such a small motion of ¼ of a micron requires precision equipment in order to monitor and shift the mirror position such small amounts, as well as holding the mirrors with high precision to ensure the resonant or anti-resonant conditions are held while energy is built up. A preferred available method to move the third mirror to the resonant condition accurately is a piezo actuator with the fastest response time, e.g., of 50 microseconds in an example.

In an example, a three-mirror cavity dumper has been described. Using three-mirrors, the cavity dumper has a faster response time of faster than one microsecond. In an example, the three-mirror cavity dumpers have to use piezo actuator to move the third mirror. In an example, a fast piezo actuator is 50 microseconds, which is much slower than the laser light round trip time of 1 microsecond of 150m optical enhancement cavity (OEC).

In an example, an alternative two mirror cavity configured with a cavity dumper is described.

In an example, the present invention provides a high reflection dielectric Distributed Bragg Reflector (DBR) or GaAs/AlGaAs DBR or any material DBR, which have been used as a high reflection mirror with a reflectivity of more than 99.99%. In an example, we have provided a high reflection DBR mirror with an additional function of changing the direction of the reflected laser beam by applying an acoustic wave of 0.01MHz~1GHz into the DBR through the piezo transducer. In an example, an IR laser with a wavelength ranging between 1020nm-1070nm is desirable in our present invention of OEC because the mirror damage of the OEC is minimized or reduced using the IR laser.

In an example, a DBR mirror is composed of multiple layers, In an example, each layer thickness is λ/4n. λ is the laser wavelength of 1040nm, n is the refractive index of each layer. For example, refractive index of Ta₂O₅, SiO₂, GaAs and Al_{0.9}Ga_{0.}As is 2.2,1.5, 3.3 and 3.0 respectively. A difference of refractive index of each DBR of Ta₂O₅/SiO₂ and GaAs/Al_{0.9}Ga_{0.}As are Δn (A value of refractive index difference between) both materials) =0.7 and Δn=0.3, respectively. For the two examples, Δn is relatively large. Thus, 20~50 period would be enough to obtain the high reflectivity of 99.9999%. By applying the acoustic wave of 0.01MHz~1GHz to the GaAs/Al_{0.9}Ga_{0.}As DBR mirror through the piezo transducer, the reflected laser beam is diffracted with a certain angle of up to 20 degrees from inside of optical cavity of the first optical path to outside of optical cavity of the second optical path, which is called as acoustic optical modulator (AOM). Then, the enhanced laser beam after the multireflection inside of the cavity is extracted from the first optical path to second optical path. The response time of 5 nanoseconds-100 nanoseconds of the AOM is much faster than 1 microsecond corresponding to a round trip time of a laser beam circulating in a 150m optical enhancement cavity (OEC). Thus, the enhanced laser beam is completely extracted from the second mirror after completing the amplification of the pulse intensity before next pulse is coming to second DBR mirror. When the response time is 10 nanoseconds of the AOM, the present example is provided for much shorter cavity of 1.5m OEC. In an example, the shorter cavity provides an advantage to reduce space and cost of OEC.

In an example, GaAs/Al_{0.9}Ga_{0.}As has been described using the AOM. The above-mentioned example can be applied for Ta₂O₅/SiO₂ or HfO₂/SiO₂ DBR, any kinds of dielectric DBRs and other DBRs such as III-Nitride based or conventional III-V based DBRs to extract the reflected laser beam from the first optical path to second optical path.

In an example, an optical enhancement cavity (OEC) with two high reflection mirrors of 99.999% and 150m cavity length wherein the above mentioned two mirrors OEC cavity dumper is provided. In this case, the laser pulse source with pulse energy of 0.1mJ and a frequency 1MHz is enhanced up to 100,000 time after multi-reflections of about 100,000 times inside of the OEC, and then enhanced laser beam with a pulse energy of 10kJ is extracted through the optical modification device of second mirror with a frequency of 10Hz by diffracting the reflected laser beam by applying an acoustic wave into the DBR mirror through the piezo transducer.

Another present invention is that acoustic wave is generated in vacuum inside of the cavity of the OEC. In an example, there is no medium in vacuum to propagate the acoustic wave. Thus, the laser beam is as close as possible to the piezo transducer to be diffracted by the acoustic wave.

In an example, we describe how an acoustic wave interacts with a laser beam in the description below.

When an acoustic wave interacts with a laser beam, the interaction can cause diffraction through a phenomenon known as the acousto-optic effect. This effect occurs due to the interaction between the sound wave and the light wave in a material medium, typically a crystal or an optical fiber.

In an example, an acoustic wave is generated within the material medium. This can be done using a piezoelectric transducer or another method capable of producing sound waves.

In an example, as the acoustic wave passes through the material, it creates periodic variations in the refractive index of the medium. This modulation of refractive index occurs due to the acoustic wave causing periodic density fluctuations within the material.

In an example, when a laser beam passes through the medium experiencing these refractive index changes, it interacts with the varying refractive index regions. This interaction results in diffraction of the laser beam.

In an example, a periodic modulation of refractive index acts as a diffraction grating for the laser beam. As a result, the laser beam is split into multiple orders of diffraction, each traveling in a slightly different direction. The angle and intensity of the diffracted beams depend on the wavelength of the laser, the frequency and amplitude of the acoustic wave, and the characteristics of the material medium.

In an example, by controlling the parameters of the acoustic wave (such as frequency, amplitude, and phase), control of the diffraction pattern is achieved and, therefore, manipulate the laser beam. As background, the principle is utilized in various acousto-optic devices, such as acousto-optic modulators, deflectors, and tunable filters, which are employed in applications ranging from laser communication and spectroscopy to laser-based imaging and sensing.

In an example, an interaction between acoustic waves and laser beams through the acousto-optic effect provides a means of dynamically controlling and manipulating laser light, enabling various practical applications in optics and photonics. Further details of the techniques can be found throughout the present specification and more particularly below.

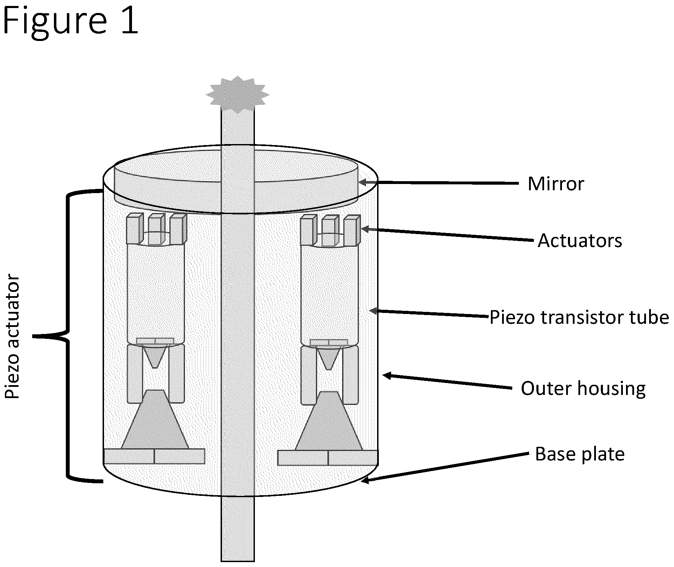

Figure 1 is a simplified diagram of a plurality of piezo actuator devices coupled to the back side of a mirror device coupled to a mirror housing device capable of adjusting the position of a mirror in a uniaxial direction in an example according to the present invention. In an example, a plurality of piezo actuator devices are coupled to a base plate coupled to a mirror housing coupled to a electronic driving device. An electronic current is generated by an electronic driving device coupled to a piezo actuator device adjusting the length of the piezo actuator device from an initial length M to a final length N. Upon reaching the final length N, a laser pulse is reflected off of a mirror device and redirected forming an optical enhancement cavity. The piezo actuators should be placed at the edge region of DBR mirror or mounter of DBR mirror because the laser beam is extracted from a backside of the mirror.

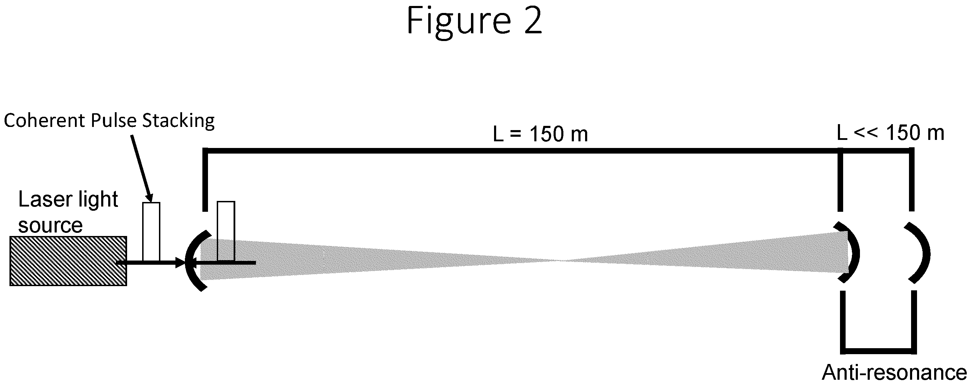

Figure 2 is a simplified diagram of a three-mirror optical enhancement cavity device in an amplification configuration in which a primary cavity is formed between a first mirror device and second mirror device and a secondary cavity is formed between a second mirror device and a third mirror device according to an example of the present invention. In an example, the three-mirror optical enhancement cavity is first configured in a build-up phase, in which the length of the first mirror device and the second mirror device and the length of the second mirror device and the third mirror device are set to amplify a CW or laser pulse in the primary cavity and reject light from the secondary cavity from a lower energy level O to a higher energy level P.

As shown, a third mirror device is placed behind one of the mirror device at fixed length forming a secondary cavity that is anti-resonant with the primary cavity, resulting in no transmission of the laser light into the secondary cavity.

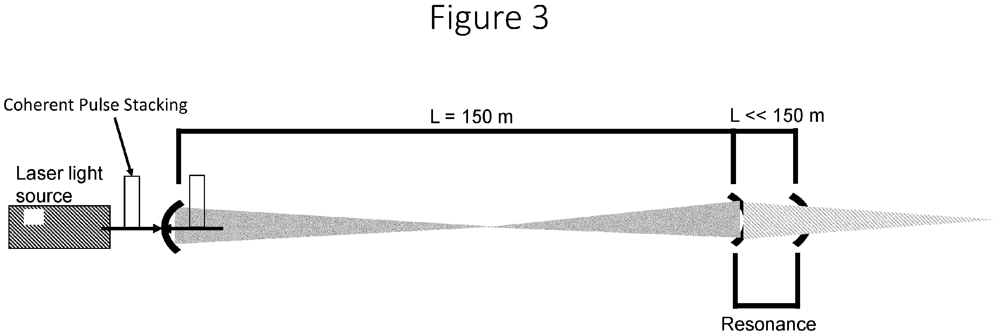

Figure 3 is a simplified diagram of a three-mirror optical enhancement cavity device in a dumping configuration in which a primary cavity is formed between a first mirror device and second mirror device and a secondary cavity is formed between a second mirror device and a third mirror device in an example according to the present invention. Upon reaching a higher energy level P, the length between the second mirror device and third mirror device is changed from a length Q to a new length R, whereupon the amplified CW or laser pulse at a higher energy P is transferred to the secondary cavity and then propagated into free space.

As shown, a third mirror device is placed behind one of the mirror device at fixed length forming a secondary cavity that is resonant with the primary cavity, resulting in transmission of the laser light into the secondary cavity and further transmission through the third mirror device out of both cavities.

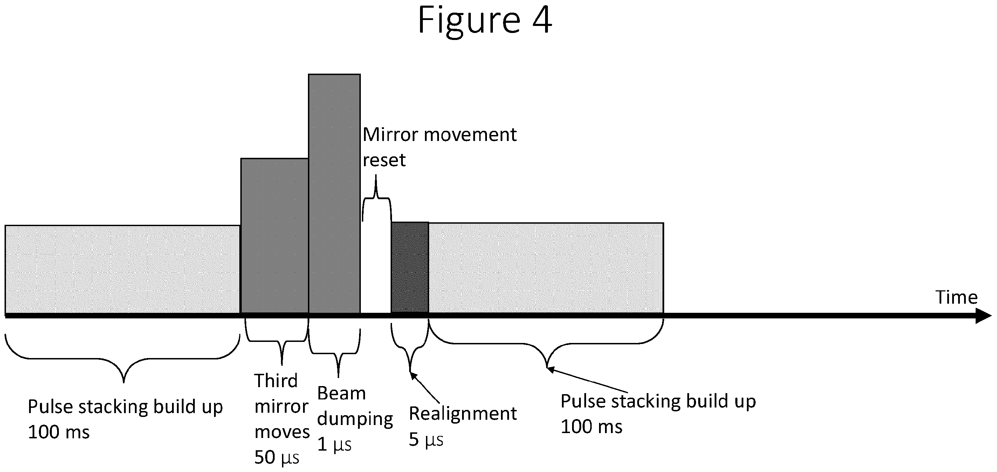

Figure 4 is a simplified diagram illustrating a timeline of the operations undergone by the three-mirror optical enhancement cavity and the relative time each operation takes according to an example of the present invention. In an example the primary and secondary cavity are configured to amplify a CW or laser pulse for 100 ms amplifying a CW or laser pulse from a lower energy level M to a higher energy level N. Upon reaching a higher energy level N, the third mirror device moves from a first position S to a second position T for 50 microseconds. Upon reaching a second position T, the amplified CW or laser pulse is dumped into a secondary cavity followed by propagation into free space in 1 microsecond. The position of the third mirror device is then returned from a position T to an original position S and the amplification process is repeated.

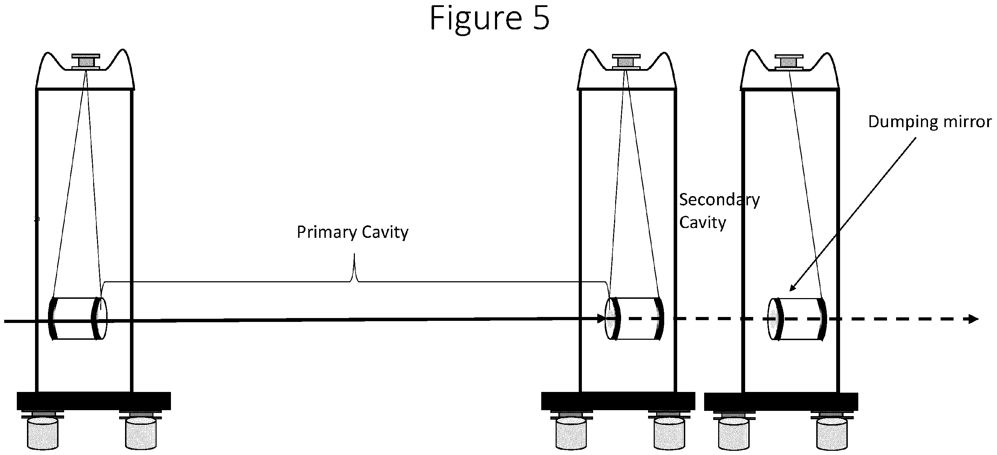

Figure 5 is a simplified diagram of a three-mirror optical enhancement cavity wherein each cavity mirror is suspended through a suspension system according to an example of the present invention. In an example, the three-mirror cavity is configured with a first mirror device and a second mirror device forming a primary cavity and the second mirror device and a third mirror device forming a secondary cavity. The first mirror device, second mirror device, and third mirror device are coupled to a mirror housing device coupled to a wire device to suspend each of the mirror devices in free space.

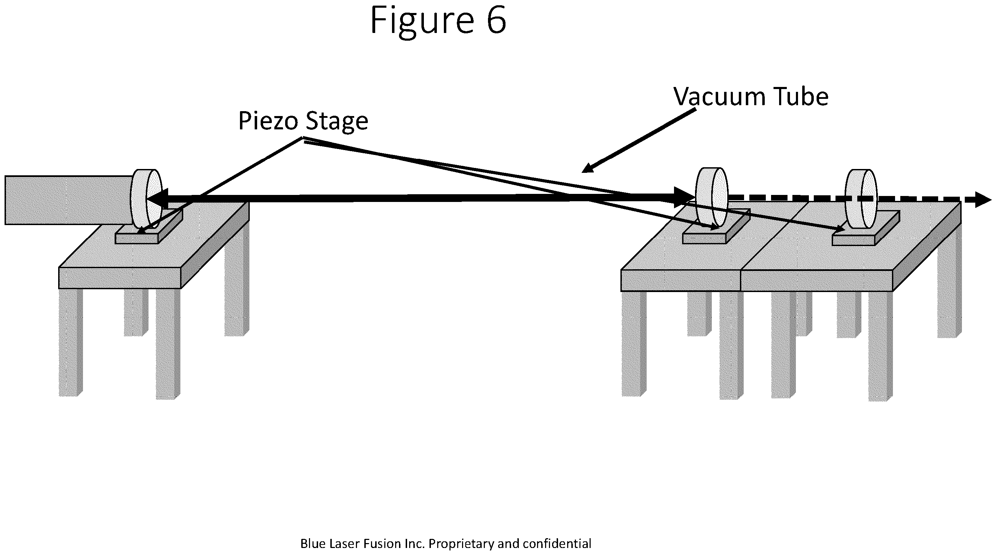

Figure 6 is a simplified diagram of a three-mirror optical enhancement cavity wherein each cavity mirror is mounted in a rigid cavity system according to an example of the present invention. The three-mirror cavity is configured with a first mirror device and a second mirror device forming a primary cavity and the second mirror device and third mirror device forming a secondary cavity. The first mirror device, second mirror device, and third mirror device are coupled to a rigid mirror housing device coupled to a rigid table device forming a rigid three-mirror optical enhancement cavity.

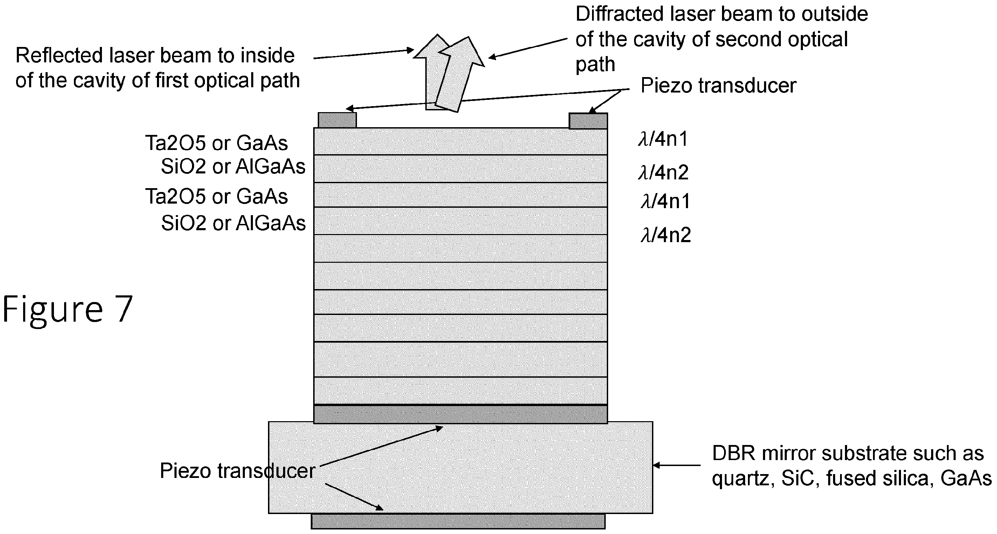

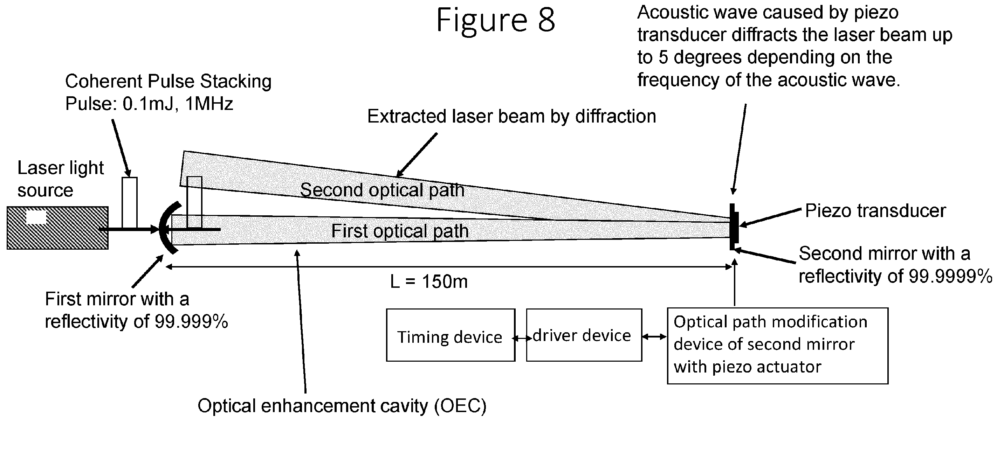

Figure 7 is a simplified diagram of another example of a high reflection dielectric of Ta₂O₅/SiO₂ and GaAs/Al_{0.9}Ga_{0.}As distributed brag reflectors (DBRs) according to an example of the present invention. Each thickness is λ/4n. λ is the laser wavelength of 1040nm, n is the refractive index of each layer. For example, refractive index of Ta₂O₅, SiO₂, GaAs and Al_{0.9}Ga_{0.}As is 2.2,1.5, 3.3 and 3.0 respectively. The difference of refractive index of each DBR of Ta₂O₅/SiO₂ and GaAs/Al_{0.9}Ga_{0.}As are Δn=0.7 and Δn=0.3, respectively. For these two examples, Δn is relatively large. Thus, 20~50 period would be enough to obtain the high reflectivity of 99.999%. By applying the acoustic wave of 0.01MHz~1GHz to the GaAs/Al_{0.9}Ga_{0.}As DBR mirror through the piezo transducer as shown in Figure 7, the reflected laser beam is diffracted with a certain angle of up to 20 degrees from inside of optical cavity of the first optical path to outside of optical cavity of the second optical path, which is called as acoustic optical modulator (AOM). Then, the enhanced laser beam is extracted from the first optical path to second optical path as shown in Figures 7 and 8. The response time of 5 naoseconds-100 nanoseconds of the AOM is much faster than 1 microsecond which value is a round trip time of laser beam of 150m optical enhancement cavity (OEC) of Figure 8. Thus, the enhanced laser beam is completely extracted from the second mirror after completing the amplification of the pulse intensity before next pulse is coming to second DBR mirror. When the response time is 10 nanoseconds, the AOM could be used for much shorter cavity of 1.5m OEC. That is a great advantage of this example to reduce the required space and cost of OEC. In the case GaAs/AlGaAs on GaAs, GaAs becomes piezo transducer because conventional III-V and III-nitride materials have a piezo characteristic. Thus, other conventional III-V and III-nitride materials are used for piezo transducer and also for DBR mirrors. The piezo transducer should be attached to the backside of the DBR mirror wherein the acoustic wave directly go into the DBR mirror as shown in Figure 7. The, the backside of the piezo transducer is bonded to the DBR mirror substrate. When the intensity of the acoustic wave is high enough, the piezo transducer could be placed at the back side of the DBR mirror substrate as shown in Figure 7.

In an example, GaAs/Al_{0.9}Ga_{0.}As has been described using the AOM. The above-mentioned example can be applied for Ta₂O₅/SiO₂ or HfO₂/SiO₂ DBR and other DBRs to extract the laser beam from the first optical path to second optical path.

As shown, a two mirror OEC with acoustic optic modulator (AOM) is used to extract the laser beam by diffracting the reflected laser beam by applying an acoustic wave into the DBR mirror through the piezo transducer.

Figure 8 is a simplified diagram of present example of an optical enhancement cavity (OEC) with two high reflection mirrors of 99.999% and 150m cavity length in an example of the present invention. In this case, the laser pulse source with pulse energy of 0.1mJ and a frequency 1MHz is enhanced up to 100,000 time after multi-reflections inside of the cavity, and then enhanced pulse energy of 10kJ is extracted through the optical modification device of second mirror with a frequency of 10Hz by diffracting the reflected laser beam from inside of optical cavity of the first optical path to outside of optical cavity of the second optical path by applying the acoustic wave through the piezo transducer, as mentioned about Ta₂O₅/SiO₂ DBR mirror or GaAs/Al_{0.9}Ga_{0.}As DBR mirror in Figure 7.

As shown, a two mirror OEC with acoustic optic modulator (AOM) is used to extract the laser beam by diffracting the reflected laser beam by applying an acoustic wave into the DBR mirror through the piezo transducer.

In an example, the laser beam interacts with the DBR mirror to cause the laser beam to be diffracted, reflected, or traverse through the DBR mirror. In an example, the first optical path is continuous and co-incident with the second optical path. In an example, the laser traverses through the DBR mirror to the second optical path, which is co-incident with the first optical path.

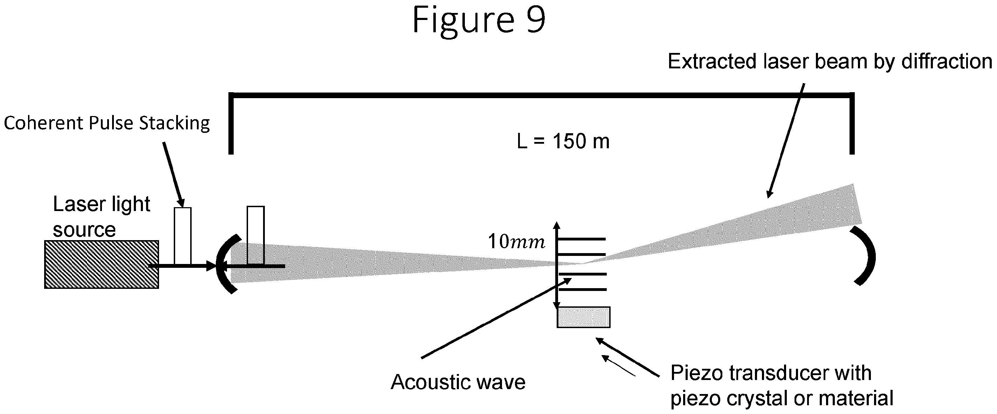

Figure 9 is a simplified diagram of present invention wherein the acoustic wave is generated in vacuum inside of the cavity of the OEC according to an example of the present invention. In an example, no medium to propagate the acoustic wave is desired. In an example, the laser beam should be as close as the piezo transducer to be diffracted by the acoustic wave. The laser beam is focused into the place where the acoustic wave is strong as close as less than 10mm from the transducer. By changing the vacuum level from 10⁻⁵torr to 300torr, we could increase the acoustic propagation distance from 0.1 mm to 10mm. Then, the laser beam is diffracted by the acoustic wave.

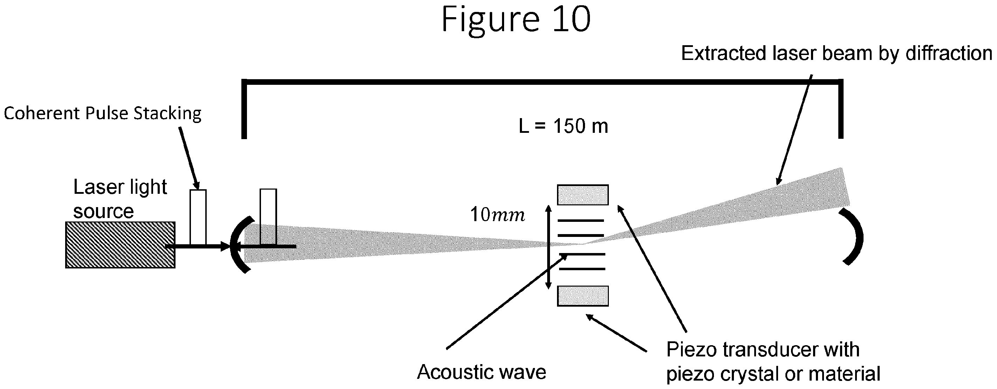

Figure 10 is a simplified diagram of present invention wherein the acoustic wave is generated in vacuum inside of the cavity of the OEC according to an example of the present invention. In this case, no medium to propagate the acoustic wave due to vacuum ambient. Due to lack of medium of air, the laser beam should be as close as the piezo transducer to be diffracted by the acoustic wave. Two piezo transducers with piezo crystals or materials are placed with a gap as small as 1~200 microns. Then the acoustic waves is applied from two piezo transducers with a different frequency of the acoustic wave to achieve an enhanced acoustic wave by using two piezo transducers. The laser beam is focused into the gap sandwiched by two piezo transducers where the acoustic wave is stronger than other regions. Then, the laser beam is diffracted by the acoustic wave. By changing the vacuum level from 10⁻⁵torr to 300torr, we could increase the acoustic propagation distance of the gap from 0.2 mm to 10mm in an example. We could change the vacuum level locally near the piezo transducers by introducing the gas or air locally and pumping vacuum from the opposite side locally because OEC needs a high vacuum level in an example.

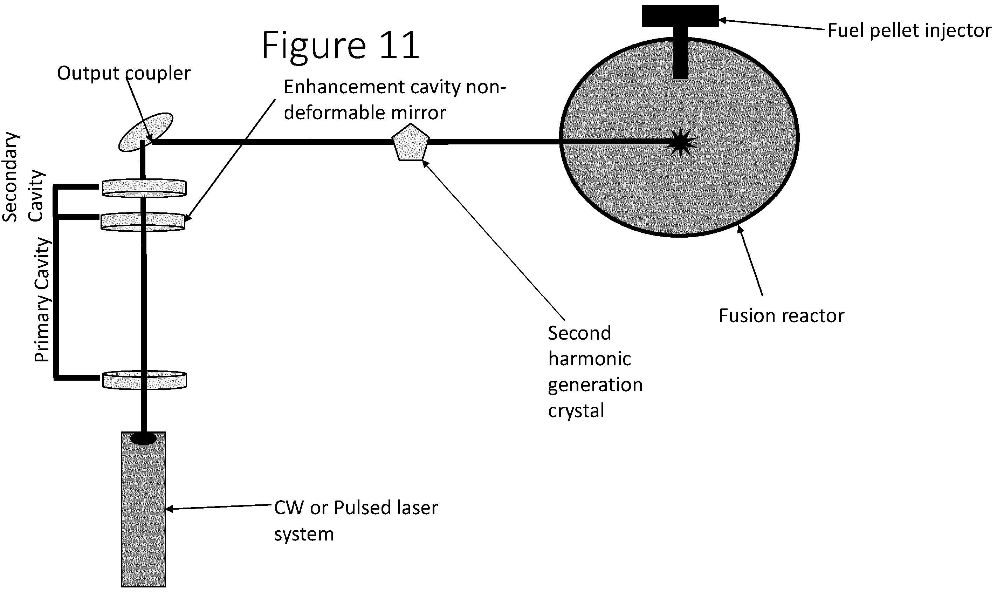

Figure 11 is a simplified diagram of a method to redirect a CW or laser pulse removed from a three-mirror optical enhancement cavity (OEC) or a two mirror OEC with AOM mentioned in Figures 7 through 10 in an example. In an example, a first mirror device and a second mirror device are placed facing each other forming a primary optical enhancement cavity and the second mirror and a third mirror are positioned to form a secondary optical enhancement cavity. In an example, a laser light source operating in either CW or laser pulse mode is positioned to inject into a primary optical enhancement cavity. The length of the secondary optical enhancement cavity is set to a length L, where L results in anti-resonant cavity conditions and laser light is rejected from the secondary cavity, resulting in amplification in the primary optical enhancement cavity from a lower energy level M to a higher energy level N. Upon reaching a higher energy level N, the third mirror is moved resulting in a change in length of the cavity from a length L to a new length R yielding a resonant secondary optical enhancement cavity. The amplified laser light is then coupled to the second mirror and is transferred to the secondary optical enhancement cavity. The amplified laser light in the secondary optical enhancement cavity is coupled to the third and is transferred into free space. Upon propagation into free space from the three-mirror optical enhancement cavity (OEC) or a two mirror OEC with AOM mentioned in Figures 7 ~10, the laser light is redirected with an external mirror into a fusion reactor.

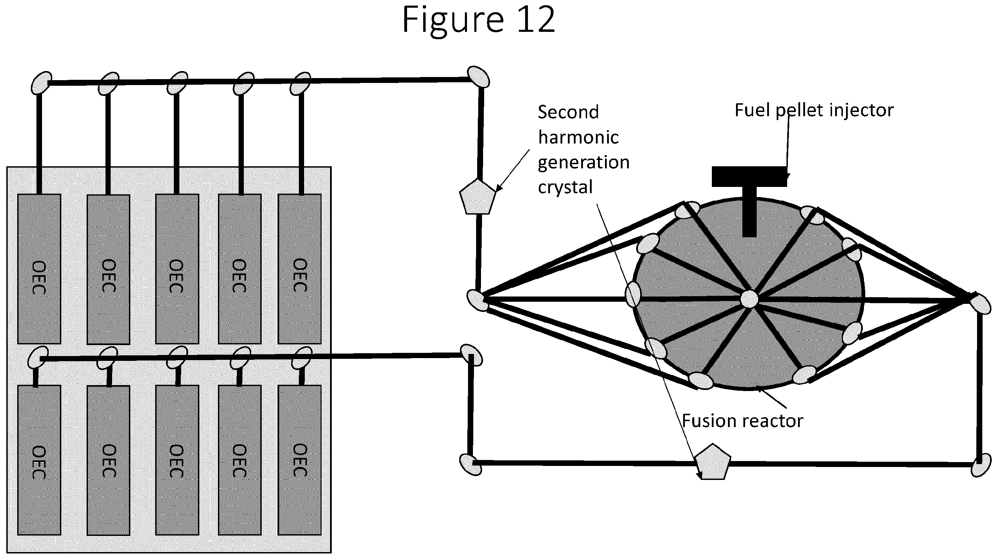

Figure 12 is a simplified diagram demonstrating an example of a fusion reactor system configured with a plurality of three-mirror optical enhancement cavities according to an example of the present invention. In an example, a plurality of three-mirror optical enhancement cavities is configured with a first mirror and second mirror forming a primary cavity and the second and a third mirror forming a secondary cavity. A plurality of pulse laser light sources is coupled to the three-mirror optical enhancement cavities, configured to amplify the pulsed laser in the primary cavity from a lower energy level M to a higher energy level N. Upon reaching a higher energy level N, the third mirror in each three-mirror optical enhancement cavity is moved from a position S to a new position T. Upon the third mirror reaching position T in each three-mirror optical enhancement cavity, the amplified laser pulse is coupled to the second mirror and is transferred into the secondary cavity which is then coupled to the third mirror and transferred into free space. The plurality of laser pulses transferred into free space from the three-mirror optical enhancement cavity (OEC) or two mirror OECs with AOM mentioned in Figures 7 through 10 are coupled to a plurality of harmonic generator devices, doubling or tripling the frequency of the laser pulses. The plurality of laser pulses with double the frequency is coupled to a plurality of external mirror devices and directed into a fusion reactor to ignite a fusion fuel. In an example, an IR laser is the desirable for OEC laser because the damage of the DBR mirror is minimized or reduced using IR, e.g., of 1020nm-1070nm.

In an example, the present invention provides a high-power laser system configured to a nuclear fusion reactor designed to implode and ignite a fusion fuel. In an example, the system has a continuous wave laser light source modulated to output a laser pulse or a continuous wave operation (CW) ("source laser"). In an example, the system has a coherent beam combination (CBC) amplifying laser device that amplifies the laser pulse or the CW generated from the source laser from a lower energy level N to a higher energy level O. In an example, the system has an optical enhancement cavity (OEC) comprising three-mirrors and configured to further excite the higher energy level of the pulse laser or the CW laser from the higher energy level O to an even higher energy level P within the optical enhancement cavity. The OEC is configured to dump the even higher energy level laser pulse to an area outside of the optical enhancement cavity.

In an example, the present invention provides an alternative system. In an example, the system has an optical enhancement cavity (OEC) configured with two mirrors comprising a mirror A coupled to a CW or a pulsed laser light source and a mirror B facing the mirror A, in which a reflectivity of the mirror A with a reflectivity, e.g., of more than 99.99%, is much larger than the mirror B with a reflectivity, e.g., of less than 99.99%. The OEC is positioned such that mirror A is facing mirror B forming a primary enhancement cavity. The term "A" and "B" are used herein for reference purposes.

In an example, the system has a third mirror characterized as mirror C positioned behind the mirror B and facing a same direction as mirror B forming a secondary enhancement cavity, a reflectivity of mirror C is less than 99.99% as the mirror B.

In an example, the system has a length of the primary enhancement cavity is larger than a length of the secondary enhancement cavity.

In an example, the system has a plurality of Q piezo actuator devices coupled to a backside of the mirror C where Q is greater than 1 and the plurality of Q piezo actuator devices is capable of adjusting a position of the mirror C to a position R to reject light from the primary enhancement cavity in a buildup phase to a position T to accept light in the secondary enhancement cavity. In an example, Q is a number greater than two. The term "C" and "R" are used as reference herein.

In an example, the mirror C is configured with a plurality of piezo actuator devices capable of moving a distance corresponding to a quarter wavelength of a source laser in a uniaxial direction.

In an example, the system also has a steerable mirror device capable of receiving a CW laser or laser pulse from the optical enhancement cavity and changing a direction of propagation.

In an example, the optical enhancement cavity comprises a pair of mirror devices from the three-mirrors to form a primary cavity region. In an example, one of the pair of mirror devices that forms the primary cavity region forms a secondary cavity region with a third mirror device.

In an example, the system has a third mirror device forming a secondary cavity with a second mirror device configured with a driver device that outputs an electronic signal adjusting a length of the piezoelectric material in the piezo device coupled to the third-mirror device; whereupon the second mirror device and the third mirror device are included in the three-mirrors.

In an example, the OEC comprises a primary cavity configured with a pair of mirror devices to form a primary cavity region such that a propagating laser beam circulates within the primary cavity region to resonate and increase in intensity from a first value to a second value. In an example, the OEC comprises a secondary cavity configured with one of the mirrors from the primary cavity and a third mirror. In an example, the third mirror is configured to change in position at a response time of less than 100 microseconds. In an example, the third mirror device has a piezo actuator with a response time less than 100 microseconds. In an example, the source laser has an emission wavelength from 1020nm to 1070nm. In an example, each of the mirrors is composed of a dielectric or an AlGaAs/GaAs distributed brag reflector (DBR). In an example, the source laser is composed of at least one coherent beam combining laser (CBC) to amplify the CW or the laser pulse from a lower energy level to a higher energy level.

In an example, the OEC is one of a plurality of more than 300 OECs, each of the OECs configured with three mirrors, and coupled to ignite a fuel for a fusion reaction. In an example, each of the mirrors is characterized by a size smaller than 5-inch in diameter. In an example, the OEC comprises a cavity of a length less than 50m to generate a CW laser or a longer pulse width of more than 1microsecond laser using the OEC with three mirrors. In an example, the OEC comprises a cavity of a length greater than 100m to generate a shorter pulse width of less than 0.5microsecond. In an example, the system is characterized by a wavelength of an extracted laser beam of the OEC changed from an IR(ω) to a green (2ω) or UV (3ω) through one or more nonlinear crystals, where ω is a frequency of an IR laser light source. In an example, the IR, green or UV extracted laser beam is directed inside a nuclear fusion reactor to irradiate a fuel target.

In an example, the present invention provides method for transferring a propagating continuous wave ("CW") or a laser pulse from a primary cavity to a secondary cavity to a third region in free space. The method includes using a primary cavity configured with a first mirror device and a second mirror device in which a reflectivity of the first mirror device with the reflectivity of more than 99.99% is much higher than the second mirror device with a reflectivity of less than 99.99%. The method includes using a secondary cavity configured behind and in parallel with the primary cavity configured with the second mirror device and a third mirror device with a reflectivity of less than 99.99%, each of the second mirror device and the third mirror device having a smaller reflectivity than the reflectivity of the first mirror device. In an example, the method includes injecting a CW or laser pulse from a laser source into the primary cavity such that a configuration of the first mirror device and second mirror device forms a length such that in a buildup phase in which resonating the CW or the laser pulse circulating within the primary cavity increases in an energy level from a lower energy level M to a higher energy level N, where M and N are values. The method includes configuring a third mirror device in the buildup phase to the length and forming an anti-resonant condition within the secondary cavity, thereby preventing light from entering into the secondary cavity from the primary cavity. In an example, the method includes increasing an energy level N within the primary cavity and changing a position of the third mirror device from a first position U to a second position V, in which the position V corresponds to a resonating length with the primary cavity and propagating the CW or the laser pulse coupled to the second mirror device to transmit a portion of the CW or the laser pulse through the second mirror device. The method includes forming a secondary CW or a laser pulse to resonate within the secondary cavity coupled to the third mirror device and the second mirror device and transmitting a portion of the secondary CW or the laser pulse through the third mirror device. The method includes forming a third CW or a laser pulse outside of the primary cavity and the secondary cavity.

In an example, the method includes reflecting the third CW or the laser pulse to an external mirror device configured to transmit the third CW or the laser pulse in a external propagation direction.

In an example, the invention provides yet an alternative a laser system. The system has a primary optical enhancement cavity configured between a first mirror device and a second mirror device, and a length defined between the first mirror device and the second mirror device. In an example, the primary optical enhancement cavity (POEC) has a first end region within a vicinity of the first mirror device and a second end region within a vicinity of the second mirror device. In an example, the system has a secondary optical enhancement cavity configured between the second mirror devices from the primary optical enhancement and a third mirror device, and a length defined between the second mirror device and the third mirror device is less than the length of the primary optical enhancement cavity. In an example, the secondary optical enhancement cavity has a second end region within a vicinity of the second mirror device and a third end region within a vicinity of the third mirror device. In an example, the system has a common mirror defined by the second mirror device to form the primary optical enhancement cavity and the secondary optical enhancement cavity. In an example, the system has a pulse or CW laser device coupled to the primary optical enhancement cavity to generate a pulse or CW laser beam at a first intensity range to be propagated between the first mirror device and the second mirror device and then between the second mirror device and third mirror device when the third mirror device is moved to a position capable of receiving the CW laser or the laser pulse. In an example, the system has a chamber configured to enclose the primary optical enhancement cavity and the secondary optical enhancement cavity under a vacuum environment and at least one actuator driver device configured to the third mirror device to cause the secondary optical enhancement cavity to be in phase or in an anti-resonance relative to the primary optical enhancement cavity by moving the third mirror device from an anti-resonant position R to a resonant position S.

In an example, the system has a housing for each of the mirror devices configured to either be attached to a rigid grounded surface or to a hanger device and suspended forming a pendulum structure. In an example, the actuator drive device can comprise a piezo actuator device. In an example, the actuator drive device can also comprise an electromagnet actuator device.

In an example, the present invention provides a nuclear fusion system. The system has a fusion reaction chamber comprising an interior region. In an example, the interior region comprises a reaction region. In an example, the system has a plurality of optical enhancement cavities (OECs) numbered from 1 to N which are located outside of the fusion reaction chamber, where N is an integer of 2 and greater.

In an example, each of the optical enhancement cavities comprises a first mirror device having a first face and configured on a first end region and a second mirror device having a second face, which opposing the first face. In an example, the second mirror device is configured on a second end region. In an example, the system has a primary cavity region defined between the first face and the second face.

In an example, the system has a third mirror device having a third face, the third face opposing a backside of the second face and configured on a third end region behind the second end region and outside of the first cavity region.

Preferably, the system has a secondary cavity region defined between the second face and the third face.

In an example, the system has a laser device operably coupled to at least one mirror device and configured to generate a laser pulse or continuous wave laser (CW) propagating between the first face and the second face and in anti-resonance between the second face and third face to prevent the laser pulse from propagating between the second face and the third face to collectively combine to increase in energy intensity from a first intensity to a second intensity to an Mth intensity for M cycles, where M is greater than 1,000 cycles at the cavity region.

In an example, the system has at least one piezo actuator driver device configured to the third mirror device to move the third mirror device such that the secondary cavity region is in resonance with the propagating laser pulse within the primary cavity region and propagates the laser pulse or CW into the secondary cavity region.

In an example, the system has a plurality of steering mirror devices numbered from 1 to N, where N is an integer of two and greater. In an example, the plurality of steering mirrors, respectively, coupled to the plurality of optical enhancement cavities. Each of the steering mirror devices is configured to receive the pulse laser beam or CW laser from the secondary cavity region and configured to direct the laser pulse or CW laser beam in a direction to be focused.

In an example, the system has a plurality of focusing optics numbered from 1 to N. In an example, the plurality of focusing optics, respectively, operably are coupled to the plurality of steering mirrors. Each of the steering mirrors is configured to focus the pulse laser beam or CW laser to be directed to the reaction region.

In an example, the system has a fuel target injected into the reaction region and spatially placed to receive each of the plurality of pulse laser or CW laser beams to cause nuclear ignition of the fuel target.

In an example, the system has a first support member configured to support the first end region,. a second support member configured to support the second end region and a third support member configured to support the third end region, such that the primary optical enhancement cavity and the secondary optical enhancement cavities are in a rigid and stable alignment.

In an example, the fusion reaction chamber is maintained in a vacuum environment.

In an example, the first mirror device is characterized by a mirror reflectivity of 99.99% and greater and the second mirror device and the third mirror devices are characterized by a mirror reflectivity of 99.99% and lower for both the pulse laser beam and the CW laser.

In an example, the piezo actuator driver device comprises a piezo actuator device.

In an alternative example, the invention provides a laser generation system. In an example, the system has an optical enhancement cavity (OEC), e.g., maintained in a vacuum of 300 Torr or less and characterized by a length of 0.1 meters to 1 kilometer. In an example, the optical enhancement cavity is configured to increase an intensity of a laser beam comprising a continuous wave (CW) or a pulse from an initial energy power intensity to a higher energy power intensity propagating on a first optical path inside of the optical enhancement cavity by circulating at least a portion of the laser beam from a light source having a CW or a pulse energy output, e.g., of 0.001 millijoule to 1 Mega Joule or more, on the first optical path;
In an example, the system has an optical path modification device coupled to the optical cavity. In an example, the optical path modification device is configured to repeatedly change a propagation of the laser beam propagating on the first optical path at a predetermined time, e.g., ranging from 0.001 microseconds to 10 seconds with a response time from 1 picosecond to 30 microseconds, to cause the laser beam propagating on the first optical path to change in direction to a second optical path outside of the optical enhancement cavity and outside of the first optical path.

In an example, the system has a timing device configured having a predetermined frequency to adjust the optical path modification device such that the timing device is configured to adjust the optical path modification device after a predetermined number of cycles of the laser beam between at least the pair of mirrors such that each cycle of the laser beam progressively increases an intensity of the CW or the pulse of the laser beam.

In an example, the system has a driver device coupled to the timing device and the optical path modification device being configured such that an optical element of a Distributed Bragg reflectors (DBR) mirror is capable of extracting the laser beam by diffracting the laser beam caused by an acoustic wave inside of the DBR mirror, thereby causing the laser beam propagating on the first optical path to change direction to the second optical path.

In an example, the optical enhancement cavity (OEC) is a Fabry-Perot cavity composed of a pair of high reflectivity mirrors, e.g., of more than 99.99%. In an example, each of the high reflectivity mirrors comprises a dielectric Distributed Bragg reflector (DBR), including a GaAs/AlGaAs DBR or a dielectric DBR. In an example, the DBR is coupled to an acoustic wave, e.g., ranging from 0.01MHz to 10GHz, and a diffraction angle that is changed, e.g., from 0.00001 degrees to 10 degrees. In an example, the dielectric DBR is selected from at least HfO₂, SiO₂, Ta₂O₅, TeO₂, Glass, Quartz, Ge, PbMO₄, LiNbO3, KDP, KH₂PO₄, BBO, BTO or combinations thereof. In an example, the diffraction of the laser beam is caused by an Acoustic Optical Modulator (AOM). In an example, the diffraction of the laser beam is caused by the acoustic wave generated by a piezo transducer. In an example, the piezo transducer is placed at an area of a back side of the DBR mirror or at an entirety of an area of backside of the DBR mirror. In an example, the laser beam has an emission wavelength, e.g., from 1020nm to 1070nm. In an example, the DBR mirror is composed of at least a group III-nitride material, a group III-V materials, or combinations thereof. In an example, the group III-V nitride material and the group III-V material are provided in a piezo transducer. In an example, the optical path modification device comprises at least GaAs and characterized as a transducer. In an example, the optical path modification device comprises at least GaAs with a crystal orientation of (111) and characterized as a transducer. In an example, the optical path modification device is composed of at least Ta₂O₅/SiO₂ or HfO₂/DBR mirror. In an example, the optical path modification device is composed of at least Ta₂O₅/SiO₂ DBR or HfO₂/DBR mirror on a GaAs transducer.

In an example, the wavelength of the laser beam from the OEC is changed from IR(ω) to green (2ω) or UV (3ω) through a nonlinear crystal, where ω is a frequency of an IR laser light source. In an example the laser beam from the OEC irradiates a fuel in a fusion reactor chamber. In an example, the IR, green or UV laser beams are irradiated into a fuel inside of a fusion reactor.

In an example, the present invention provides a method of diffracting a laser beam. The method includes generating an acoustic wave into an interior region of Distributed Bragg Reflector (DBR) mirror and irradiating an acoustic wave from a backside of the DBR mirror. In an example, the laser beam or incident laser beam is irradiated from a frontside of the DBR mirror; and then the laser beam is reflected by the DBR mirror wherein the reflected laser beam is diffracted by the acoustic wave at the same time.

In an example, the diffracted laser beam has an angle from 0.00001 to 10 degrees from an incident laser beam. In an example, the DBR mirror is composed of a GaAs/AlGaAs or a dielectric DBR. In an example, 50%∼99% of the incident laser beams are diffracted. In an example, the DBR mirror comprises a GaAs/AlGaAs DBR mirror on a GaAs substrate or template wherein the GaAs is characterized as a transducer to generate the acoustic wave. In an example, the DBR mirror comprises a piezo transducer placed at a backside of DBR mirror. In an example, the laser beam has an emission wavelength from 100 nm to 3000 nm. In an example, the DBR mirror is composed of at least Ta₂O₅/SiO₂, HfO₂/SiO₂, or a dielectric DBR mirror. In an example, the DBR mirror is composed of at least Ta₂O₅/SiO₂, HfO₂/SiO₂, or a dielectric DBR on a GaAs transducer.

In an example, the present invention provides a system including a light source configured to generate a laser. The system has an optical enhancement cavity coupled to the light source and configured to increase an intensity of the laser and a cavity dumper coupled to the optical enhancement cavity. The system has an acoustic wave coupled to the cavity dumper to diffract the laser.

In an example, the laser is focused into a region where an intensity of the acoustic wave is high. In an example, the laser is focused, e.g., within 10 mm distance, from a piezo transducer. In an example, the laser is generated using two piezo transducers comprising piezo crystals configured with a gap, e.g., less than 10 mm. In an example, the laser beam is focused into a gap to be diffracted by the acoustics wave.

Further details of an optical enhancement cavity using a Fabry Perot cavity is found in a patent application titled "A FAST IGNITION FUSION SYSTEM AND METHOD," in the names of Shuji Nakamura and Hiroaki Ohta listed under U.S. Serial No. 18/319,368 filed 5/17/23, commonly assigned, and hereby incorporated by reference in their entirety.

While the above is a full description of the specific examples, various modifications, alternative constructions and equivalents may be used. As an example, the packaged device can include any combination of elements described above, as well as outside of the present specification. In an example, the terms "first" "second" and others do not imply order, and the terms M, N, O, P, and others represent values. Therefore, the above description and illustrations should not be taken as limiting the scope of the present invention which is defined by the appended claims.

## Claims

1. A laser generation system, the system comprising:
an optical enhancement cavity (OEC) maintained in a vacuum of 300 Torr or less and **characterized by** a length of 0.1 meters to 1 kilometers, the optical enhancement cavity being configured to increase an intensity of a laser beam comprising a continuous wave (CW) or a pulse from an initial energy power intensity to a higher energy power intensity propagating on a first optical path inside of the optical enhancement cavity by circulating at least a portion of the laser beam from a light source having a CW or a pulse energy output on the first optical path;
an optical path modification device coupled to the optical cavity, the optical path modification device being configured to repeatedly change a propagation of the laser beam propagating on the first optical path at a predetermined time to cause the laser beam propagating on the first optical path to change in direction to a second optical path outside of the optical enhancement cavity and outside of the first optical path;
a timing device configured having a predetermined frequency to adjust the optical path modification device such that the timing device is configured to adjust the optical path modification device after a predetermined number of cycles of the laser beam between at least the pair of mirrors such that each cycle of the laser beam progressively increases an intensity of the CW or the pulse of the laser beam; and
a driver device coupled to the timing device and the optical path modification device being configured such that an optical element of a Distributed Bragg reflectors (DBR) mirror is capable of extracting the laser beam by interacting the laser beam caused by an acoustic wave inside of the DBR mirror, thereby causing the laser beam propagating on the first optical path to change direction to the second optical path.

2. The system of claim 1 wherein the optical enhancement cavity (OEC) is a Fabry-Perot cavity composed of a pair of high reflectivity mirrors of more than 99.99%, each of the high reflectivity mirrors comprises a dielectric Distributed Bragg reflector (DBR), including a GaAs/AlGaAs DBR or a dielectric DBR; wherein the predetermined time ranging from 0.001 microseconds to 10 seconds with a response time from 1 picosecond to 30 microseconds; wherein the pulse energy output of 0.001 millijoule to 1 Mega Joule.

3. The system of claim 1 wherein the DBR is coupled to an acoustic wave ranging from 0.01MHz to 10GHz and a diffraction angle that is changed from 0.00001 degrees to 10 degrees; wherein the laser beam is characterized as a single mode or a multi-mode.

4. The system of claim 1 wherein the dielectric DBR is selected from at least HfO₂, SiO₂, Ta₂O₅, TeO₂, Glass, Quartz, Ge, PbMO₄, LiNbO3, KDP, KH₂PO₄, BBO, BTO or combinations thereof.

5. The system of claim 1 wherein the diffraction of the laser beam is caused by an Acoustic Optical Modulator (AOM).

6. The system of claim 1 wherein the diffraction of the laser beam is caused by the acoustic wave generated by a piezo transducer.

7. The system of claim 6 wherein piezo transducer is placed at an area of a back side of the DBR mirror or at an entirety of an area of backside of the DBR mirror.

8. The system of claim 1 wherein the laser beam has an emission wavelength from 1020nm to 1070nm.

9. The system of claim 1 wherein the DBR mirror is composed of at least a group III-nitride material, a group III-V materials, or combinations thereof; wherein the interacting is selected from diffracting, traversing through, reflecting, or any combination thereof.

10. The system of claim 9 wherein the group III-V nitride material and the group III-V material are provided in a piezo transducer.

11. The system of claim 1 wherein the optical path modification device comprises at least GaAs and characterized as a transducer.

12. The system of claim 1 wherein the optical path modification device comprises at least GaAs with a crystal orientation of (111) and characterized as a transducer.

13. The system of claim 1 wherein the optical path modification device is composed of at least Ta₂O₅/SiO₂ or HfO₂/DBR mirror.

14. The system of claim 1 wherein the optical path modification device is composed of at least Ta₂O₅/SiO₂ DBR or HfO₂/DBR mirror on a GaAs transducer.

15. The system of claims 1 wherein the wavelength of the laser beam from the OEC is changed from IR(ω) to green (2ω) or UV (3ω) through a nonlinear crystal, where ω is a frequency of an IR laser light source.

16. The system of claim 1 wherein the laser beam from the OEC irradiates a fuel in a fusion reactor chamber; wherein the first optical path is within the OEC and the second optical path traverses through the DBR mirror.

17. The system of claim 15 wherein the IR, green or UV laser beams are irradiated into a fuel inside of a fusion reactor; wherein the first optical path is continuous with the second optical path.

18. A method of interacting a laser beam, the method comprising:
generating an acoustic wave into an interior region of Distributed Bragg Reflector (DBR) mirror;
irradiating an acoustic wave from a backside of the DBR mirror such that an incident laser beam is irradiated from a frontside of the DBR mirror; and
reflecting the laser beam by the DBR mirror wherein the reflected laser beam is diffracted creating a diffracted laser beam by the acoustic wave at a same time.

19. The method of claim 18 the diffracted laser beam has an angle from 0.00001 to 10 degrees from the incident laser beam.

20. The method of claim 18 wherein the DBR mirror is composed of a GaAs/AlGaAs or a dielectric DBR.

21. The method of claim 18 wherein the incident laser beam has 50%∼99% of the incident laser beam that are diffracted.

22. The method of claim 18 wherein the DBR mirror comprises a GaAs/AlGaAs DBR mirror on a GaAs substrate or template wherein the GaAs is characterized as a transducer to generate the acoustic wave.

23. The method of claim 18 wherein the DBR mirror comprises a piezo transducer placed at a backside of the DBR mirror.

24. The method of claim 18 wherein the laser beam has an emission wavelength from 100 nm to 3000 nm.

25. The method of claim 18 wherein the DBR mirror is composed of at least Ta₂O₅/SiO₂, HfO₂/SiO₂, or a dielectric DBR mirror.

26. The method. of claim 18 wherein the DBR mirror is composed of at least Ta₂O₅/SiO₂, HfO₂/SiO₂, or a dielectric DBR on a GaAs transducer.

27. A laser system comprising:
a light source configured to generate a laser;
an optical enhancement cavity comprising at least a pair of mirrors coupled to the light source and configured to increase an intensity of the laser;
a cavity dumper coupled to the optical enhancement cavity; and
an acoustic wave coupled to the cavity dumper to diffract, reflect, or interact with the laser.

28. The system of claim 27 wherein the laser is focused into a first region where an intensity of the acoustic wave is higher than a second region.

29. The system of claim 27 wherein the laser is focused within a 10 mm distance from a piezo transducer.

30. The system of claim 27 wherein the laser is generated using two piezo transducers comprising piezo crystals configured with a gap less than 10 mm.

31. The system of claim 27 wherein the laser beam is focused into a gap to be diffracted by the acoustics wave.
